# EUROPEAN PATENT SPECIFICATION

(11) **EP 2 522 762 B1**
(45) Date of publication and mention of the grant of the patent: **25.12.2013**
(21) Application number: 12167607.6
(22) Date of filing: 11.05.2012
(51) Int. Cl.: C25D 5/02, C25D 5/56, B29C 45/16, B29C 45/00

(54) **Method of manufacturing a decorated object using an electroplating process**
Verfahren zur Herstellung eines dekorierten Objekts mithilfe eines Elektroplattierungsverfahrens
Procédé de fabrication d'un objet décoré par un procédé de dépôt électrolytique

(30) Priority: 11.05.2011 US 201161484976 P
(43) Date of publication of application: 14.11.2012
(73) Proprietor: Albéa Services, 92230 Gennevilliers (FR)
(72) Inventor: Ramos, Victor, 78120 Rambouillet (FR)
(74) Representative: Gevers France

(56) References cited:
- DE-A1- 4 432 966
- ES-A1- 2 259 923
- JP-A- 54 119 570
- US-A- 3 640 789
- US-A- 4 170 524

## Description

### FIELD OF THE INVENTION

This invention relates to a method of manufacturing a decorated object using an electroplating process.

More particularly, this invention relates to a method of manufacturing a decorated object wherein more than one discrete region on the decorated object is metalized using a single electroplating process.

### BACKGROUND TO THE INVENTION

Traditionally, objects manufactured for use in the beauty and cosmetic industry are decorated to increase shelf appeal and to demonstrate the brand image. Many decoration techniques exist, but this invention deals primarily with the process of electroplating, which, as such, is well known in the industry. This process usually involves covering an entire substrate, such as a plastic container or object, with a thin layer of a desired material, typically a metal. Alternatively, in a variation known as selective electroplating, the careful selection of the substrate material allows only a part of the substrate to be metalized.

A common difficulty encountered with the electroplating process is that where two or more discrete (i.e. separate) regions are provided on a single object, it is not possible to metalize all of these discrete regions in a single electroplating process. A common example is where individual letters of a text, or different designs or logos, are spaced around an object or container, but that do not actually touch each other. This limitation is derived from the fact that the electroplating process requires a current conducting path to allow an electric current to pass.

One way of addressing the limitation described in the previous paragraph is to join together all zones, objects, logos or letters, thereby forming the required current conducting path. However, this does not result in a particularly attractive product. The patent application JPS54119570 discloses a partly metal electroplated thermoplastic resin article wherein the conductive paths between the decorative regions to be electroplated at the front face are embedded in the resin and wherein the cathode contacts are provided at the back face. Alternatively, discrete pre-metalized components, to define the required metalized regions, may be fixed onto the substrate object using, for example, glue or any other mechanical attachment means. It will be appreciated that this particular solution adds to the cost and complexity of the overall product. In addition, there is an inherent risk that these pre-metalized components can become loose and fall off the object or container.

### SUMMARY OF THE INVENTION

An object of the invention is to provide a method of manufacturing a decorated object that will, at least partly, alleviate the above problem and provide the advantages set out above.

According to a first aspect of the invention, there is provided a method of manufacturing a decorated object, the method comprising the steps of:
providing a base piece made of a first material;
moulding a second material over the base piece to form a pattern, the pattern comprising a plurality of decorating components and bridges connecting the decorating components together;
depositing a layer of metal on the pattern so as to form a metalized pattern; and
partially covering the metalized pattern with a cover layer so as to mask the bridges but keep the decorating components visible.

In an embodiment, the step of depositing a layer of metal on the pattern comprises using a selective electroplating process on the second material.

In an embodiment of the invention, the first material is selected so that the layer of metal does not get deposited on the first material.

In an embodiment, the first material includes at least one of: a polycarbonate (PC) or a copolyester.

In a preferred embodiment of the invention, the first material comprises a poly (1, 4-cyclohexylenedimethylene terephtalate) (PCT).

In a further preferred embodiment, the first material comprises a glycol-modified PCT copolyester (PCTG) or an acid-modified PCT copolyester (PCTA).

In an embodiment of the invention, the second material is selected to facilitate the deposition of the layer of metal onto the second material.

In an embodiment, the second material comprises an acrylonitrile-butadiene-stryene (ABS) copolymer or a blend of ABS copolymer and polycarbonate (PC).

In an embodiment, the step of partially covering the metalized pattern with the cover layer comprises moulding the cover layer so as to mask the bridges and to surround the decorating components so as to keep the decorating components visible.

In an embodiment, the base piece comprises a border that surrounds the decorating components of the pattern, the border coming into contact with edges of a mould when moulding the cover layer so as to create a sealing engagement between the mould and the base piece, thereby preventing masking of the decorating components.

In an embodiment, the base piece defines a recess for accommodating the second material during the step of moulding the second material over the base piece to form the pattern.

According to a second aspect of the invention, there is provided a base piece made from a first material for use in a method of manufacturing a decorated object, the base piece comprising:
a recess that defines a pattern, the pattern comprising a plurality of decorating components and bridges connecting the decorating components together, the recess being able to accommodate a second material so as to form the pattern; and
a border that surrounds the decorating components of the pattern, the border enabling a cover layer to be applied to the base piece so as to mask the bridges but keep the decorating components visible.

### BRIEF DESCRIPTION OF THE DRAWINGS

The invention will be described, by way of example only, with reference to the accompanying drawings in which:
- **Figure 1**: shows a flowchart representing a method of manufacturing a decorated object, according to an example embodiment of the present invention;
- **Figure 2**: shows top and bottom perspective views of a base piece for use in the manufacturing of a decorated object, and in particular in accordance with a first step of the method shown in Figure 1;
- **Figure 3**: shows a second material being moulded over the base piece to form a pattern, in accordance with a second step of the method shown in Figure 1, the pattern comprising a plurality of decorating components and bridges connecting the decorating components together;
- **Figure 4**: shows a layer of metal being deposited on the pattern so as to form a metalized pattern, in accordance with a third step of the method shown in Figure 1; and
- **Figure 5**: shows the metalized pattern being covered with a cover layer so as to mask the bridges but keep the decorating components visible, in accordance with a fourth step of the method shown in Figure 1.

### DETAILED DESCRIPTION

It is to be appreciated that, for purposes of clarity and ease of reference, the same reference numerals have been used to refer to the same (or substantially similar) component, throughout the description.

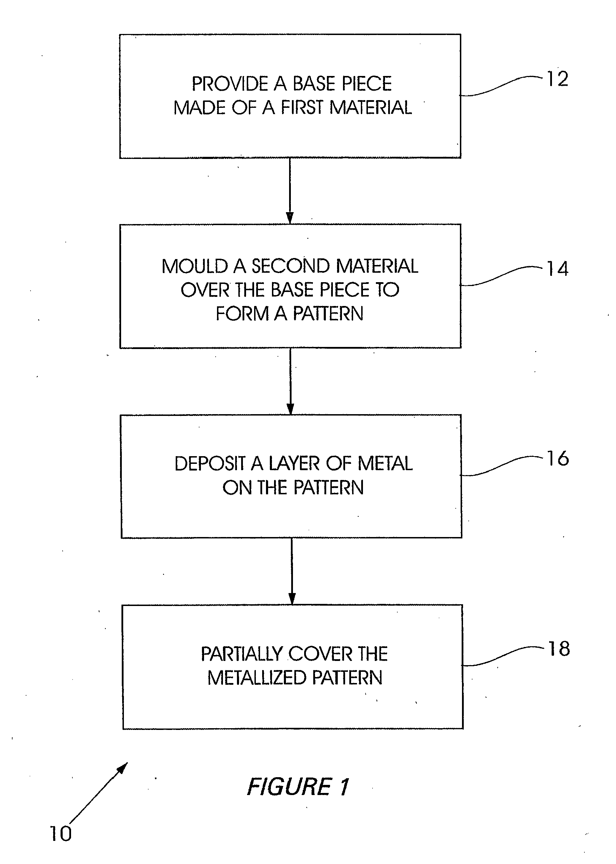

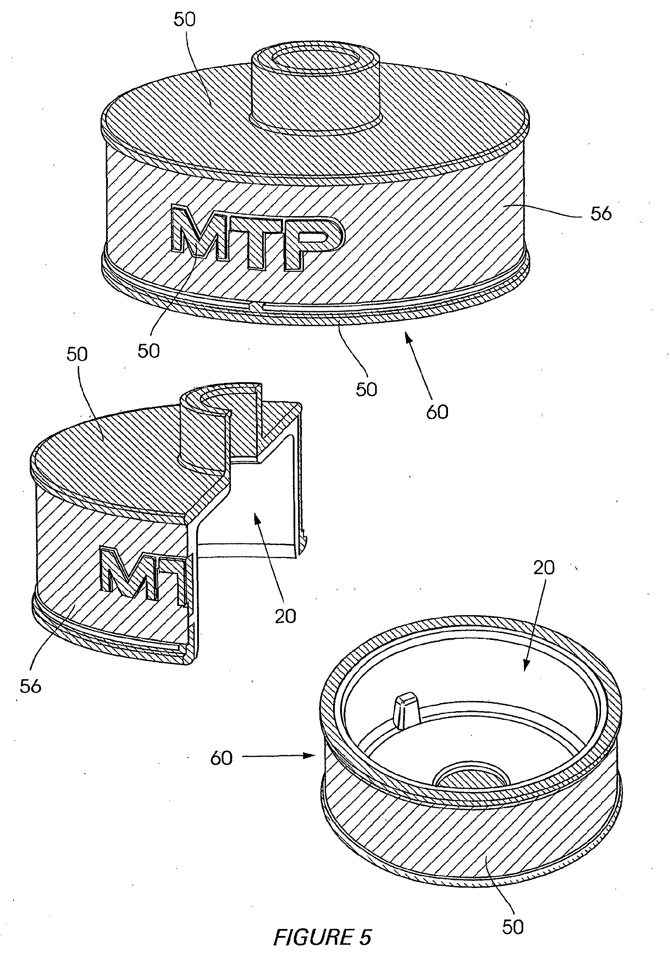

The present invention provides a method of manufacturing a decorated object. The overall method is represented in Figure 1 by reference numeral 10, and the completed decorated object is show in Figure 5 by reference numeral 60.

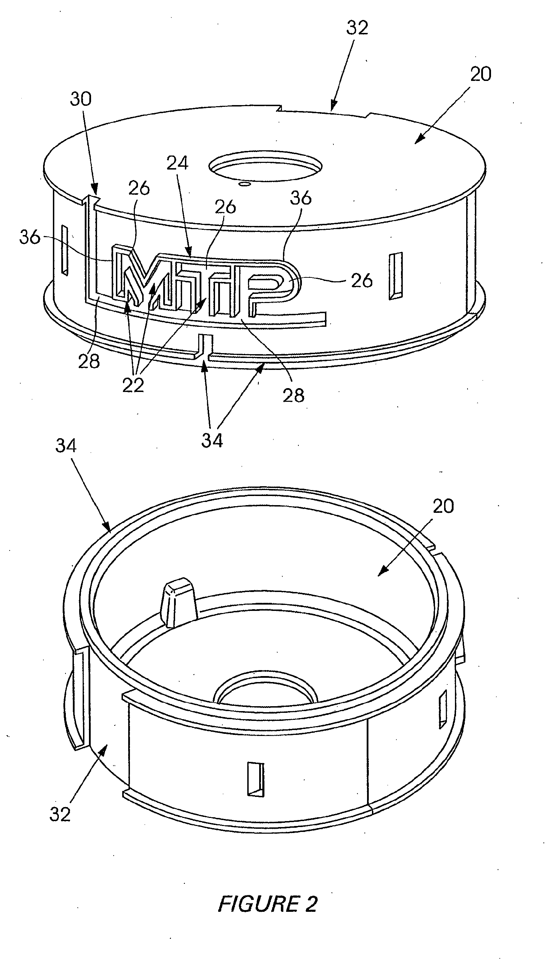

Referring first to accompanying Figures 1 and 2, the method 10 of manufacturing a decorated object 60 comprises a first step of providing a base piece made of a first material, as indicated by block 12. An example of a base piece is shown in Figure 2 by reference numeral 20.

In the illustrated embodiment, the base piece 20 is substantially cylindrical, but it may take any one of a number of different shapes and configurations. The base piece 20 is manufactured (typically, moulded) from a first material that is not conducive to an electroplating process. In other words, as will be described in more detail further below, the first material is selected so that a layer of metal cannot get deposited onto it.

In an embodiment, the first material comprises a polycarbonate (PC) or a copolyester. In a preferred embodiment of the invention, the first material comprises a poly (1, 4-cyclohexylenedimethylene terephtalate) (PCT). In a further preferred embodiment, the first material comprises a glycol-modified PCT copolyester (PCTG) or an acid-modified PCT copolyester (PCTA).

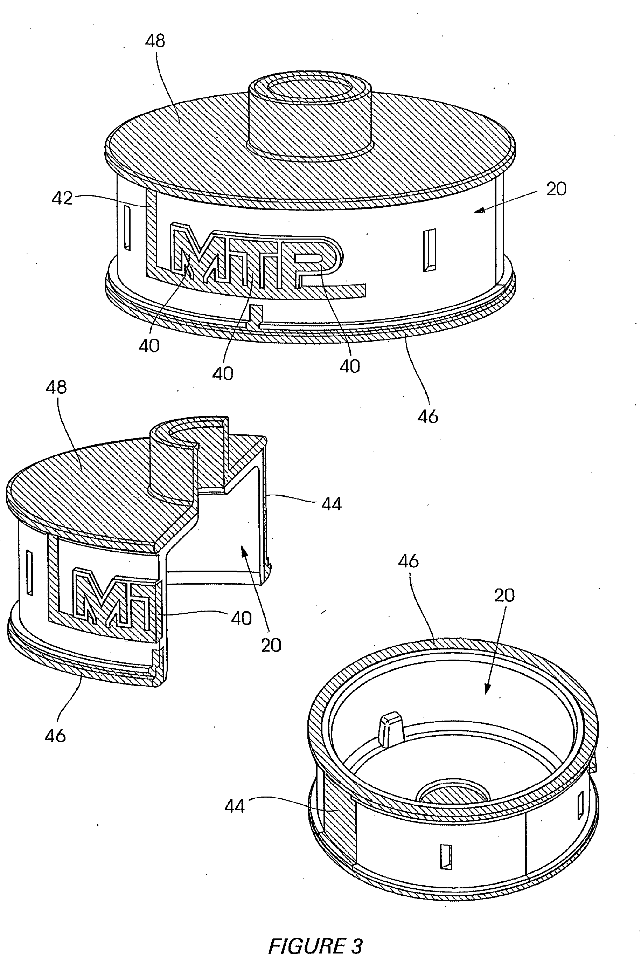

The base piece 20 comprises a recess 22 that defines a pattern 24, the pattern 24 comprising a plurality of decorating components 26 (in this case, the letters M, T and P) and bridges 28 that connect the decorating components 26 together. The recess is able to accommodate a second material so as to form the pattern 24, but this will be explained in more detail further below with reference to Figure 3.

The base piece 20 further comprises a first material inlet 30 that is in communication with the recess 22 of the pattern 24, a second material inlet 32 on an opposite side of the base piece 20, and a lower peripheral material path 34 that is in communication with the second material inlet 32.

The base piece 20 further comprises a border 36 that surrounds the decorating components of the pattern 24, the border 36 enabling a cover layer to be applied to the base piece 20 so as to mask the bridges 28 but keep the decorating components 26 visible. The application of the cover layer will be described in more detail further below with reference to Figure 5.

Referring back to Figure 1, and now with reference to Figure 3, the method 10 of manufacturing the decorated object 60 comprises a second step of moulding a second material over the base piece 20 to form the pattern 24, as indicated by block 14. The second material thus fills the recess 22 so as to form the plurality of decorating components and bridges of the pattern 24, as indicated generally by reference numeral 40 in Figure 3. The second material also fills the first material inlet 30, as indicated by reference numeral 42, the second material inlet 32, as indicated by reference numeral 44, the lower peripheral material path 34, as indicated by reference numeral 46, and defines an upper moulded portion 48.

The recess 22 thus conveniently accommodates the second material during this step 14.

As will become clearer further on, the second material defines an electrical current conducting path and is selected to facilitate the deposition of a metal layer onto the second material. In an embodiment, the second material comprises an acrylonitrile-butadiene-stryene (ABS) copolymer or a blend of ABS copolymer and polycarbonate (PC).

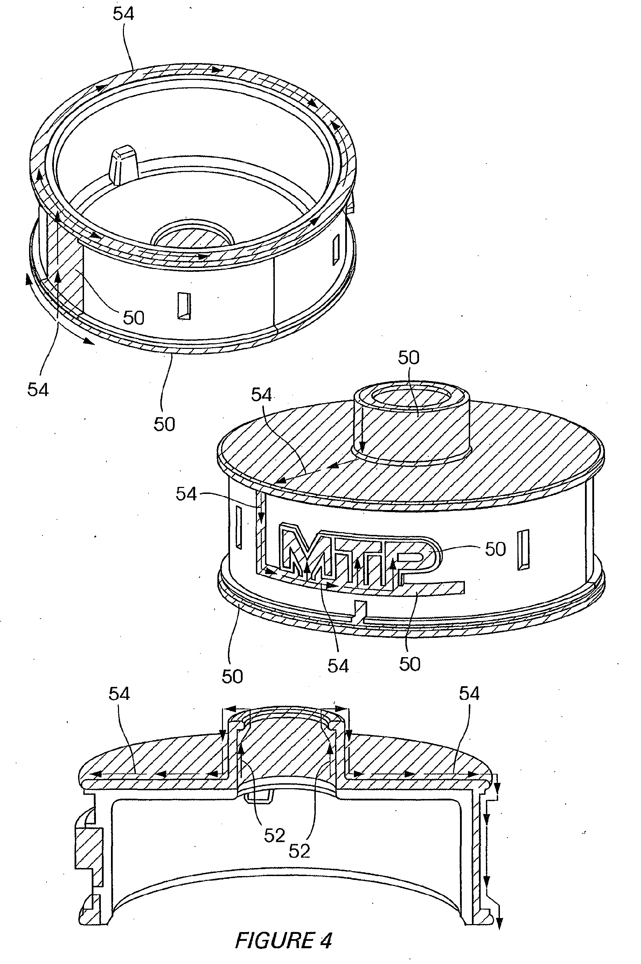

Referring back to Figure 1, and now with reference to Figure 4, the method 10 of manufacturing the decorated object 60 comprises a third step of depositing a layer of metal on the pattern 24 so as to form a metalized pattern, as indicated by block 16, and as indicated in general by reference numeral 50 in Figure 4. This is typically achieved by using a selective electroplating process on the second material, as described above. In addition to the metalized pattern 50, all the areas covered with the second material will be metalized. The electroplating process is relatively standard, and in broad terms, it involves passing an electrical current along the conductive second material in a single process, starting at contact zones 52, and as indicated by arrows 54, whilst the base piece 20 is immersed in a suitable solution.

Referring back to Figure 1, and now with reference to Figure 5, the method 10 of manufacturing the decorated object 60 comprises a fourth step of partially covering the metalized pattern with a cover layer 56 so as to mask the bridges 28 but keep the electroplated decorating components 26 visible, as indicated by block 18.

In an embodiment, this step 18 comprises moulding the cover layer 56 so as to mask the bridges 28 and to surround the decorating components 26 so as to keep the decorating components 26 visible. In this manner, it is ensured that the interconnecting bridges 28 extending between the decorating components 26 are hidden from view after the manufacturing process has been completed.

The cover layer can be selected from a range of polymers but in general needs to be compatible with the polymer used to form the base piece 20 in order to create the adhesion between them after over moulding.

As described above, the base piece 20 comprises a border 36 that surrounds the pattern 24. In use, the border 36 comes into contact with the edges of a mould when moulding the cover layer 56 so as to create a sealing engagement between the mould and the base piece 20. This prevents masking of the decorating components 26, so that the metalized decorating components 26 remain visible.

It will be appreciated that the present invention is designed to provide an effective method of manufacturing a decorated object using a single electroplating process. In particular, all of the decorating components to be metalized, and the connecting bridges, are produced in a single metalizing operation using selective electroplating, with the connecting bridges then being hidden from view by a final coating step so as to only expose the decorating components in an ostensibly discrete manner. The decorating components, however, remain totally integrated into the container or object.

## Claims

1. A method of manufacturing a decorated object, the method comprising the steps of:
providing a base piece made of a first material;
moulding a second material over the base piece to form a pattern, the pattern comprising a plurality of decorating components and bridges connecting the decorating components together;
depositing a layer of metal on the pattern so as to form a metalized pattern; and
partially covering the metalized pattern with a cover layer so as to mask the bridges but keep the decorating components visible.

2. The method of claim 1, wherein the step of depositing a layer of metal on the pattern comprises using a selective electroplating process on the second material.

3. The method of either one of claims 1 or 2, wherein the first material is selected so that the layer of metal does not get deposited on the first material.

4. The method of claim 3, wherein the first material includes at least one of: a polycarbonate (PC) or a copolyester.

5. The method of claim 4, wherein the first material comprises a poly (1, 4-cyclohexylenedimethylene terephtalate) (PCT).

6. The method of claim 4, wherein the first material comprises a glycol-modified PCT copolyester (PCTG) or an acid-modified PCT copolyester (PCTA).

7. The method of any one of the preceding claims, wherein the second material is selected to facilitate the deposition of the layer of metal onto the second material.

8. The method according of claim 7, wherein the second material comprises an acrylonitrile-butadiene-stryene (ABS) copolymer or a blend of ABS copolymer and polycarbonate (PC).

9. The method of any one of the preceding claims, wherein the step of partially covering the metalized pattern with the cover layer comprises moulding the cover layer so as to mask the bridges and to surround the decorating components so as to keep the decorating components visible.

10. The method of any one of the preceding claims, wherein the base piece comprises a border that surrounds the pattern, the border coming into contact with edges of a mould when moulding the cover layer so as to create a sealing engagement between the mould and the base piece, thereby preventing masking of the decorating components.

11. The method of any one of the preceding claims, wherein the base piece defines a recess for accommodating the second material during the step of moulding the second material over the base piece to form the pattern.

12. A base piece made from a first material for use in a method of manufacturing a decorated object, the base piece comprising:
a recess that defines a pattern, the pattern comprising a plurality of decorating components and bridges connecting the decorating components together, the recess being able to accommodate a second material so as to form the pattern;
and
a border that surrounds the pattern, the border enabling a cover layer to be applied to the base piece so as to mask the bridges but keep the decorating components visible.

## Patentansprüche

1. Verfahren zum Herstellen eines dekorierten Gegenstandes, wobei das Verfahren die folgenden Schritte umfasst:
Bereitstellen eines Grundwerkstücks, das aus einem ersten Material gefertigt ist;
Gießen eines zweiten Materials über das Grundwerkstück, um ein Muster zu bilden, wobei das Muster mehrere dekorierende Komponenten und Brücken umfasst, welche die dekorierenden Komponenten miteinander verbinden;
Abscheiden einer Metallschicht auf das Muster, um ein metallisiertes Muster zu bilden; und
teilweise Abdecken des metallisierten Musters mit einer Abdeckschicht, um die Brücken zu maskieren, jedoch die dekorierenden Komponenten sichtbar zu halten.

2. Verfahren nach Anspruch 1, wobei der Schritt des Abscheidens einer Metallschicht auf das Muster das Anwenden eines selektiven Galvanisierungsverfahrens auf das zweite Material umfasst.

3. Verfahren nach einem der Ansprüche 1 oder 2, wobei das erste Material derart ausgewählt wird, dass die Metallschicht nicht auf das erste Material abgeschieden wird.

4. Verfahren nach Anspruch 3, wobei das erste Material mindestens eines der Folgenden enthält: ein Polycarbonat (PC) oder einen Copolyester.

5. Verfahren nach Anspruch 4, wobei das erste Material ein Poly(1,4-cyclohexylendimethylenterephtalat) (PCT) umfasst.

6. Verfahren nach Anspruch 4, wobei das erste Material einen glycolmodifizierten PCT-Copolyester (PCTG) oder einen säuremodifizierten PCT-Copolyester (PCTA) umfasst.

7. Verfahren nach einem der vorstehenden Ansprüche, wobei das zweite Material derart ausgewählt wird, dass es die Abscheidung der Metallschicht auf das zweite Material ermöglicht.

8. Verfahren nach Anspruch 7, wobei das zweite Material ein Acrylnitril-Butadien-Stryol-(ABS)-Copolymer oder eine Mischung von ABS-Copolymer und Polycarbonat (PC) umfasst.

9. Verfahren nach einem der vorstehenden Ansprüche, wobei der Schritt des teilweise Abdeckens des metallisierten Musters mit der Abdeckschicht das derartige Gießen der Abdeckschicht umfasst, dass die Brücken maskiert und die dekorierenden Komponenten derart umsäumt werden, dass die dekorierenden Komponenten sichtbar gehalten werden.

10. Verfahren nach einem der vorstehenden Ansprüche, wobei das Grundwerkstück einen Rand umfasst, der das Muster umgibt, wobei der Rand mit Kanten einer Gießform in Kontakt kommt, wenn die Abdeckschicht gegossen wird, um einen abdichtenden Eingriff zwischen der Gießform und dem Grundwerkstück zu erzeugen, wodurch die Maskierung der dekorierenden Komponenten verhindert wird.

11. Verfahren nach einem der vorstehenden Ansprüche, wobei das Grundwerkstück eine Aussparung definiert, um das zweite Material während des Schrittes des Gießens des zweiten Materials über das Grundwerkstück zur Bildung des Musters aufzunehmen.

12. Grundwerkstück, das aus einem ersten Material gefertigt ist, zur Verwendung in einem Verfahren zur Herstellung eines dekorierten Gegenstandes, wobei das Grundwerkstück Folgendes umfasst:
eine Aussparung, die ein Muster definiert, wobei das Muster mehrere dekorierenden Komponenten und Brücken umfasst, welche die dekorierenden Komponenten miteinander verbinden, wobei die Aussparung ein zweites Material aufnehmen kann, um das Muster zu bilden; und
einen Rand, der das Muster umgibt, wobei der Rand ermöglicht, dass eine Abdeckschicht auf das Grundwerkstück derart aufgebracht wird, dass die Brücken maskiert werden, jedoch die dekorierenden Komponenten sichtbar gehalten werden.

## Revendications

1. Procédé de fabrication d'un objet décoré, le procédé comprenant les étapes de :
fourniture d'une pièce de base faite d'une première matière ;
moulage d'une seconde matière sur la pièce de base pour former un motif, le motif comprenant une pluralité de composants de décoration et des ponts reliant les composants de décoration ensemble ;
dépôt d'une couche de métal sur le motif de façon à former un motif métallisé ; et
couverture partielle du motif métallisé par une couche de couverture de façon à masquer les ponts mais à conserver les composants de décoration visibles.

2. Procédé selon la revendication 1, dans lequel l'étape de dépôt d'une couche de métal sur le motif comprend l'utilisation d'un processus de dépôt électrolytique sélectif sur la seconde matière.

3. Procédé selon l'une ou l'autre des revendications 1 ou 2, dans lequel la première matière est sélectionnée de sorte que la couche de métal n'est pas amenée à être déposée sur la première matière.

4. Procédé selon la revendication 3, dans lequel la première matière inclut au moins : un polycarbonate (PC) ou un copolyester.

5. Procédé selon la revendication 4, dans lequel la première matière comprend un poly(téréphtalate de 1,4-cyclohexylènediméthylène) (PCT).

6. Procédé selon la revendication 4, dans lequel la première matière comprend un copolyester glycol-PCT modifié (PCTG) ou un copolyester acide-PCT modifié (PCTA).

7. Procédé selon l'une quelconque des revendications précédentes, dans lequel la seconde matière est sélectionnée pour faciliter le dépôt de la couche de métal sur la seconde matière.

8. Procédé selon de la revendication 7, dans lequel la seconde matière comprend un copolymère d'acrylonitrile-butadiène-styrène (ABS) ou un mélange de copolymère ABS et de polycarbonate (PC).

9. Procédé selon l'une quelconque des revendications précédentes, dans lequel l'étape consistant à couvrir partiellement le motif métallisé par la couche de couverture comprend le moulage de la couche de couverture de façon à masquer les ponts et à entourer les composants de décoration de façon à conserver les composants de décoration visibles.

10. Procédé selon l'une quelconque des revendications précédentes, dans lequel la pièce de base comprend une frontière qui entoure le motif, la frontière venant en contact avec les bords d'un moule en moulant la couche de couverture de façon à créer une mise en prise d'étanchéité entre le moule et la pièce de base, empêchant de ce fait le masquage des composants de décoration.

11. Procédé selon l'une quelconque des revendications précédentes, dans lequel la pièce de base définit une partie en retrait pour loger la seconde matière pendant l'étape de moulage de la seconde matière sur la pièce de base pour former le motif.

12. Pièce de base faite d'une première matière à utiliser dans un procédé de fabrication d'un objet décoré, la pièce de base comprenant :
une partie en retrait qui définit un motif, le motif comprenant une pluralité de composants de décoration et des ponts reliant les composants de décoration ensemble, la partie en retrait étant capable de loger une seconde matière de façon à former le motif ; et
une frontière qui entoure le motif, la frontière permettant d'appliquer une couche de couverture à la pièce de base de façon à masquer les ponts mais à conserver les composants de décoration visibles.
